# EUROPEAN PATENT APPLICATION

(11) **EP 3 451 763 A1**
(43) Date of publication of application: **06.03.2019**
(21) Application number: 16901341.4
(22) Date of filing: 13.05.2016
(51) Int. Cl.: H04W 72/04, H04W 24/02, H04W 76/28, H04L 5/00

(54) **COUNTING METHOD AND APPARATUS**

(71) Applicant: Huawei Technologies Co., Ltd., Longgang District Shenzhen, Guangdong 518129 (CN)
(72) Inventor: YOU, Chunhua, Shenzhen Guangdong 518129 (CN); HUANG, Qufang, Shenzhen Guangdong 518129 (CN)
(74) Representative: Gill Jennings & Every LLP
(86) International application number: PCT/CN2016/082088
(87) International publication number: WO 2017/193386

(57) **Abstract**

A counting method and an apparatus are provided, and are applied to a carrier aggregation scenario of a first cell and a second cell. The method is: obtaining, by a terminal, a subframe K1 of the first cell and a subframe K2 of the second cell; determining, by the terminal, a PDCCH subframe from the subframe K2, and determining a monitoring subframe from the subframe K1 and the subframe K2; and controlling, by the terminal based on the PDCCH subframe, a DRX timer to perform counting, and monitoring a PDCCH based on the monitoring subframe to learn of arrival of downlink data and/or uplink grant, where the first cell is a cell on which idle channel detection needs to be performed, and the second cell is a cell on which no idle channel detection needs to be performed. In this way, a PDCCH subframe used for counting can be accurately determined on a terminal side when the DRX timer performs counting, so as to implement efficient scheduling.

## Description

### TECHNICAL FIELD

The present invention relates to the field of communications technologies, and in particular, to a counting method and an apparatus.

### BACKGROUND

To save power of a terminal, a discontinuous reception (Discontinuous reception, DRX) technology is introduced into an LTE system. A DRX cycle includes an active cycle and a sleep cycle. The terminal periodically wakes up to enter the active cycle, monitors a physical downlink control channel (Physical Downlink Control Channel, PDCCH) in the active cycle to detect arrival of downlink data or uplink grant, and does not monitor the PDCCH channel in the sleep cycle.

In the active cycle, the terminal starts a corresponding DRX timer based on a condition, for example, an on-duration timer (On-duration Timer), a DRX inactivity timer (DRX Inactivity Timer), a DRX retransmission timer (DRX Retransmission Timer), a DRX UL retransmission timer (DRX UL Retransmission Timer), or a contention resolution timer (MAC Contention Resolution Timer). The on-duration timer, the DRX inactivity timer, and the MAC contention resolution timer are configured based on the terminal, and are the same in all serving cells; while the DRX retransmission timer and the DRX UL retransmission timer are configured based on a HARQ process of a serving cell, and each HARQ process maintains one corresponding DRX retransmission timer or DRX UL retransmission timer is maintained in each HARQ process.

Specifically, the terminal starts the on-duration timer after the sleep cycle ends. The terminal continuously monitors the PDCCH in the active cycle. If the terminal has incoming uplink grant or downlink data in any serving cell, the terminal starts or restarts the DRX inactivity timer. Otherwise, the terminal directly enters the sleep cycle after the on-duration timer expires. If the terminal fails to receive downlink data in the active cycle, the terminal starts or restarts the DRX retransmission timer or the DRX UL retransmission timer after specified duration (for example, 8 ms) of a hybrid automatic repeat request (Hybrid Automatic Repeat Request, HARQ) round timer (HARQ Round Timer, HARQ RTT) expires. The DRX retransmission timer is for downlink asynchronous HARQ retransmission, whereas the DRX UL retransmission timer is for uplink asynchronous HARQ retransmission. The terminal waits for retransmitted data when the DRX UL retransmission timer or the DRX retransmission timer is on. If the DRX retransmission timer or the DRX UL retransmission timer expires, corresponding data has not been retransmitted yet, the terminal may directly enter the sleep cycle. In short, a length of the active cycle depends on the on-duration timer, the DRX inactivity timer, the DRX UL retransmission timer, the DRX retransmission timer, and the like.

These timers perform counting based on a PDCCH subframe (PDCCH-subframe), so as to determine duration of the active cycle. The so-called PDCCH-subframe may be defined as a downlink subframe (subframe) that a base station sends in carrier aggregation cells when a non-time division duplex (Time Division Duplexing, TDD) system is used for all the carrier aggregation cells. That a frequency division duplex (Frequency Division Duplexing, FDD) system is not used for all of the carrier aggregation cells includes two cases. In a first case, the TDD system is used for all the carrier aggregation cells, and in a second case, the TDD system is used for some of the carrier aggregation cells. In these two cases, if the terminal cannot simultaneously send and receive messages in a plurality of carrier aggregation cells, a special cell (Special Cell, SPCell) is used as a baseline. If a subframe sent by the base station to the SPCell is a downlink subframe, the subframe sent by the base station is a PDCCH subframe. The SPCell is a primary cell (Primary Cell, PCell) or a primary cell of a secondary base station (Primary Secondary Cell, PSCell). If the terminal can simultaneously send and receive messages in a plurality of carrier aggregation cells, a subframe of any cell may be determined as a PDCCH subframe provided that the subframe is a downlink subframe. However, in this case, a subframe of a cell on which cross-carrier scheduling is performed needs to be excluded. For example, a PCell, an SCell1, an SCell2, and an SCell3 are all carrier aggregation serving cells of the terminal. If the SCell2 is used to perform cross-carrier scheduling on the SCell3, a subframe of the SCell3 needs to be excluded when a PDCCH subframe is determined.

In addition, the MAC contention resolution timer also performs counting based on a PDCCH-subframe. This timer is applicable to a contention-based random access message. There are mainly four steps in contention-based random access. Step 1: A terminal sends a message 1, namely, a preamble sequence. Step 2: An evolutional NodeB (Evolutional NodeB, eNB) sends a message 2, namely, a random access response message. Step 3: The terminal sends a message 3, and the message specifically includes a lot of content, such as a buffer status report (Buffer Status Report, BSR) and an s-TMSI. Step 4: The eNB sends a message 4, namely, a contention resolution message. After successfully sending the message 3, the terminal starts the MAC contention resolution timer to wait for delivery of the message 4.

In LTE, after a license-assisted access (License Assisted Access, LAA) cell is introduced, carrier aggregation is performed on the LAA cell and a licensed cell. All carrier aggregation cells are subframe-aligned, that is, have a same subframe boundary and a subframe number. In addition, 3GPP specifies that for data transmission in an LAA cell, both an eNB and user equipment (User Equipment, UE) need to complete a listen before talk (Listen Before Talk, LBB) process before sending any data. If LBT is successful and a result of channel energy detection is lower than a specific threshold, a channel is considered idle and data can be sent normally. Otherwise, the channel is considered busy and data cannot be sent.

An unlicensed cell uses unlicensed spectra, and the non-licensed spectra have no symmetric uplink and downlink spectrum. Therefore, an FDD frame structure is inapplicable to the unlicensed cell. Although in a TDD mode, there is a specific quantity of uplink-downlink configurations, the TDD mode is still not flexible enough to properly arrange a frame structure based on an amount of uplink and downlink data, and consequently a preempted transmission opportunity is not effectively used. A channel resource use right successfully preempted by an eNB or a terminal is referred to as a transmission opportunity. Therefore, a frame structure used by the unlicensed cell may be a flexible uplink and downlink frame structure. In one transmission opportunity, the frame structure may be an all-downlink-subframe structure, or an all-uplink-subframe structure, or a some-downlink-transmission-subframe+some-uplink-subframe+some-special-subframe structure.

In this frame structure, when counting a PDCCH subframe, the terminal needs to determine whether a transmission in a current subframe is an uplink transmission, a downlink transmission, or a Wi-Fi transmission. However, in the prior art, when determining a direction of a transmission in a subframe of an LAA cell, a terminal is prone to PDCCH subframe misjudgment. In addition, a DRX timer of the terminal performs counting based on a PDCCH subframe. Therefore, when DRX timer performs counting on a terminal side and a base station side, because the terminal cannot accurately determine the transmission direction of the subframe of the LAA cell, the terminal side and the base station side have different understandings in counting of the DRX timer, thereby affecting data scheduling.

### SUMMARY

Embodiments of the present invention provide a counting method and an apparatus, to resolve an existing problem that in an LAA cell carrier aggregation scenario, data scheduling is affected because a terminal side and a base station side have different understandings in counting of the DRX timer.

According to a first aspect, a counting method is provided, where the method is applied to a carrier aggregation scenario of a first cell and a second cell, and includes:
obtaining, by a terminal, a subframe K1 of the first cell and a subframe K2 of the second cell;
determining, by the terminal, a PDCCH subframe from the subframe K2, and determining a monitoring subframe from the subframe K1 and the subframe K2; and
controlling, by the terminal based on the PDCCH subframe, a DRX timer to perform counting, and monitoring a PDCCH based on the monitoring subframe to learn of arrival of downlink data and/or uplink grant, where
the first cell is a cell on which idle channel detection needs to be performed, and the second cell is a cell on which no idle channel detection needs to be performed.

In the foregoing design, the terminal determines the PDCCH subframe from the subframe of the cell on which no idle channel detection needs to be performed, controls counting of the DRX timer based on the PDCCH subframe, determines the monitoring subframe from the subframe of the cell on which idle channel detection needs to be performed and the subframe of the cell on which no idle channel detection needs to be performed, and monitors the PDCCH in the monitoring subframe. In this way, in carrier aggregation of the cell on which idle channel detection needs to be performed and the cell on which no idle channel detection needs to be performed, a PDCCH subframe used for counting can be accurately determined on a terminal side when the DRX timer performs counting, so as to implement efficient scheduling.

Based on the first aspect, optionally, the determining, by the terminal, a PDCCH subframe from the subframe K2 may be implemented in the following manner: determining, by the terminal, that the subframe K2 includes at least one special subframe and/or downlink subframe, where the special subframe includes a subframe used to perform uplink transmission and/or downlink transmission in a time division manner.

Based on the first aspect, optionally, the determining, by the terminal, a monitoring subframe from the subframe K1 and the subframe K2 may be implemented in the following manner: determining, by the terminal from the subframe K1 and the subframe K2, a subframe that is a non-uplink subframe as the monitoring subframe.

Based on the first aspect, optionally, the DRX timer is an on-duration timer, a DRX inactivity timer, a DRX retransmission timer, or a contention resolution timer.

According to a second aspect, a counting method is provided, including:
sending, by a base station, configuration information to a terminal, where the configuration information includes at least one piece of duration information of a DRX timer; and
sending, by the base station, indication information to the terminal, where the indication information is used to instruct the terminal to select one of the at least one piece of duration information in the configuration information as duration of the DRX timer.

Based on the second aspect, optionally, the sending, by a base station, configuration information to a terminal includes: sending, by the base station, the configuration message to the terminal by using a radio resource control message, where the configuration information includes the at least one piece of duration information of the DRX timer.

Based on the second aspect, optionally, when the base station sends the indication information to the terminal, the base station sends the indication message to the terminal by using a physical layer indication message or a Medium Access Control message.

Based on the second aspect, optionally, the DRX timer is an on-duration timer, a DRX inactivity timer, a DRX retransmission timer, or a contention resolution timer.

In the foregoing design, the base station sends the configuration information to the terminal, pre-configures at least one piece of alternative duration information for the DRX timer, and sends the indication information to the terminal, so as to instruct the terminal to select one of the at least one piece of duration information in the configuration information as the duration of the DRX timer, and the terminal controls, based on the duration of the DRX timer and a preset counting rule of the DRX timer, the DRX timer to perform counting. In this way, the terminal uses DRX timer duration pre-configured by the base station for the terminal and a same DRX timer counting rule, and therefore it is avoided that data scheduling is affected because the terminal and the base station have different understandings in counting of the DRX timer.

According to a third aspect, a counting method is provided, including:
receiving, by a terminal, configuration information that is sent by a base station and that includes at least one piece of duration information of a DRX timer;
receiving, by the terminal, indication information sent by the base station, where the indication information is used to instruct the terminal to select one of the at least one piece of duration information in the configuration information as duration of the DRX timer;
determining, by the terminal, the duration of the DRX timer based on the indication information; and
controlling, by the terminal based on the duration of the DRX timer and a preset counting rule of the DRX timer, the DRX timer to perform counting.

In the foregoing design, the terminal receives the configuration information that is sent by the base station and that includes the at least one piece of duration information of the DRX timer, and the indication information instructing the terminal to select one of the at least one piece of duration information in the configuration information as the duration of the DRX timer, and the terminal controls, based on the duration of the DRX timer and the preset counting rule of the DRX timer, the DRX timer to perform counting. In this way, the terminal uses DRX timer duration pre-configured by the base station for the terminal and a same DRX timer counting rule, and therefore it is avoided that data scheduling is affected because the terminal and the base station have different understandings in counting of the DRX timer.

According to a fourth aspect, a counting apparatus is provided, where the counting apparatus is applied to a terminal and includes an obtaining unit, a determining unit, and a processing unit, where
the obtaining unit is configured to obtain a subframe K1 of the first cell and a subframe K2 of the second cell;
the determining unit is configured to determine a PDCCH subframe from the subframe K2, and determine a monitoring subframe from the subframe K1 and the subframe K2; and
the processing unit is configured to control, based on the PDCCH subframe, a DRX timer to perform counting, and monitor a PDCCH based on the monitoring subframe to learn of arrival of downlink data and/or uplink grant, where
the first cell is a cell on which idle channel detection needs to be performed, and the second cell is a cell on which no idle channel detection needs to be performed.

Based on the fourth aspect, optionally, when determining the PDCCH subframe from the subframe K2, the determining unit is specifically configured to determine that the subframe K2 includes at least one special subframe and/or downlink subframe, where
the special subframe includes a subframe that is used to perform uplink transmission and/or downlink transmission in a time division manner.

Based on the fourth aspect, optionally, when determining the monitoring subframe from the subframe K1 and the subframe K2, the determining unit is specifically configured to:
determine, from the subframe K1 and the subframe K2, a subframe that is a non-uplink subframe as the monitoring subframe.

Based on the fourth aspect, optionally, the DRX timer is an on-duration timer, a DRX inactivity timer, a DRX retransmission timer, or a contention resolution timer.

According to a fifth aspect, a counting apparatus is provided, where the counting apparatus is applied to a base station and includes a first sending unit and a second sending unit, where
the first sending unit is configured to send configuration information to a terminal, where the configuration information includes at least one piece of duration information of a DRX timer; and
the second sending unit is configured to send indication information to the terminal, where the indication information is used to instruct the terminal to select one of the at least one piece of duration information in the configuration information as duration of the DRX timer.

Based on the fifth aspect, optionally, the first sending unit is configured to:
send the configuration message to the terminal by using a radio resource control message, where the configuration information includes the at least one piece of duration information of the DRX timer.

Based on the fifth aspect, optionally, the second sending unit is configured to:
send the indication message to the terminal by using a physical layer indication message or a Medium Access Control message.

Optionally, the DRX timer is an on-duration timer, a DRX inactivity timer, a DRX retransmission timer, or a contention resolution timer.

According to a sixth aspect, a counting apparatus is provided, where the counting apparatus is applied to a terminal and includes a receiving unit and a processing unit, where
the receiving unit is configured to receive configuration information that is sent by a base station and that includes at least one piece of duration information of a DRX timer;
the receiving unit is further configured to receive indication information sent by the base station, where the indication information is used to instruct to select one of the at least one piece of duration information in the configuration information as duration of the DRX timer;
the processing unit is configured to determine the duration of the DRX timer based on the indication information; and
the processing unit is further configured to control, based on the duration of the DRX timer and a preset counting rule of the DRX timer, the DRX timer to perform counting.

According to a seventh aspect, a terminal device is provided, where the device includes a processor, a memory, and a communications device, the memory stores a computer readable program, and the processor controls, by running the program in the memory, the communications device to implement the counting method in the first aspect.

According to an eighth aspect, a network device is provided, where the device includes a processor, a memory, and a transceiver, the memory stores a computer readable program, and the processor controls, by running the program in the memory, the transceiver to implement the counting method in the second aspect.

According to a ninth aspect, a terminal device is provided, where the device includes a processor, a memory, and a communications device, the memory stores a computer readable program, and the processor controls, by running the program in the memory, the communications device to implement the counting method in the third aspect.

Compared with the prior art, in the counting scheme provided in the embodiments of the present invention, it is avoided that in an LAA cell carrier aggregation scenario, data scheduling is affected because a base station side and a terminal side have different understandings in counting of the DRX timer.

### BRIEF DESCRIPTION OF DRAWINGS

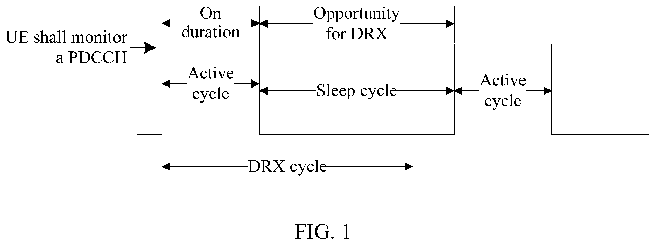

FIG. 1 is a schematic diagram of a DRX cycle;
FIG. 2 is a schematic diagram of a system architecture according to an embodiment of the present invention;
FIG. 3 is a flowchart of a counting method according to an embodiment of the present invention;
FIG. 4 is a schematic diagram of counting of an on-duration timer in an LAA cell carrier aggregation scenario according to an embodiment of the present invention;
FIG. 5 is a schematic diagram of counting of a DRX inactivity timer in an LAA cell carrier aggregation scenario according to an embodiment of the present invention;
FIG. 6 is a schematic diagram of counting of a DRX retransmission timer in an LAA cell carrier aggregation scenario according to an embodiment of the present invention;
FIG. 7 is a flowchart of another counting method according to an embodiment of the present invention;
FIG. 8 is a schematic structural diagram of a counting apparatus according to an embodiment of the present invention;
FIG. 9 is a schematic structural diagram of a counting device according to an embodiment of the present invention;
FIG. 10 is a schematic structural diagram of a counting apparatus according to an embodiment of the present invention;
FIG. 11 is a schematic structural diagram of a counting device according to an embodiment of the present invention;
FIG. 12 is a schematic structural diagram of a counting apparatus according to an embodiment of the present invention; and
FIG. 13 is a schematic structural diagram of a counting device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

The technical solutions in the present invention can be applied to a Long Term Evolution (Long Term Evolution, LTE for short) system, an evolved 4.5G or 5G system in the future, and the like. This is not limited in the present invention.

For ease of understanding by a person skilled in the art, some terms in this application are described first.
(1) A base station, also referred to as a radio access network (Radio Access Network, RAN) device, is a device that connects a terminal to a wireless network, and includes but is not limited to an evolved NodeB (evolved NodeB, eNB), a radio network controller (radio network controller, RNC), a NodeB (NodeB, NB), a base station controller (Base Station Controller, BSC), a base transceiver station (Base Transceiver Station, BTS), a home evolved NodeB (for example, a Home evolved NodeB or a Home NodeB, HNB), a baseband unit (Baseband Unit, BBU), a Wi-Fi access point (Access Point, AP), or the like.
(2) A terminal, namely UE, also referred to as a mobile terminal (Mobile Terminal), mobile user equipment, or the like, may communicate with one or more core networks by using a radio access network (for example, Radio Access Network, RAN for short). The user equipment may be a mobile terminal such as a mobile phone (also referred to as a "cellular" phone) or a computer with a mobile terminal. For example, the user equipment may be a portable, pocket-sized, handheld, computer built-in, or in-vehicle mobile apparatus, which exchanges voice and/or data with the radio access network. This is not limited in the present invention.
(3) Carrier Aggregation (Carrier Aggregation, CA). To meet requirements of a single-user peak rate and system capacity increase, in a Long Term Evolution Advanced (Long Term Evolution Advanced, LTE-A) system of the Long Term Evolution, a CA technology is introduced. This technology supports aggregation of a plurality of component carriers (Component Carrier, CC), including aggregation of CCs in a same frequency band, aggregation of contiguous or non-contiguous CCs in a same frequency band, and aggregation of CCs in different frequency bands. A terminal determines, based on a capacity of the terminal, how many carriers at most can be simultaneously used for uplink and downlink transmission.
(4) A primary cell (PCell) and a secondary cell (SCell). Among a plurality of aggregated component carriers, there is a primary component carrier (Primary Component Carrier, PCC) and at least one secondary component carrier (Secondary Component Carrier, SCC), and these component carriers belong to a same base station. The PCC is used for control plane transmission as well as user plane transmission, and the SCC is used for user plane transmission. A cell corresponding to the PCC is a PCell, and a cell corresponding to the SCC is an SCell. The PCell is a cell that the terminal initially accesses, and is responsible for radio resource control (radio resource control, RRC) communication between the PCell and the terminal. The SCell is added during RRC reconfiguration, to provide an additional radio resource. The PCell is determined during connection establishment (connection establishment), and the SCell is added/modified/released by using an RRC connection reconfiguration (RRC Connection Reconfiguration) message after an initial security activation procedure (initial security activation procedure).
(5) "A plurality of' refers to two or more than two. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

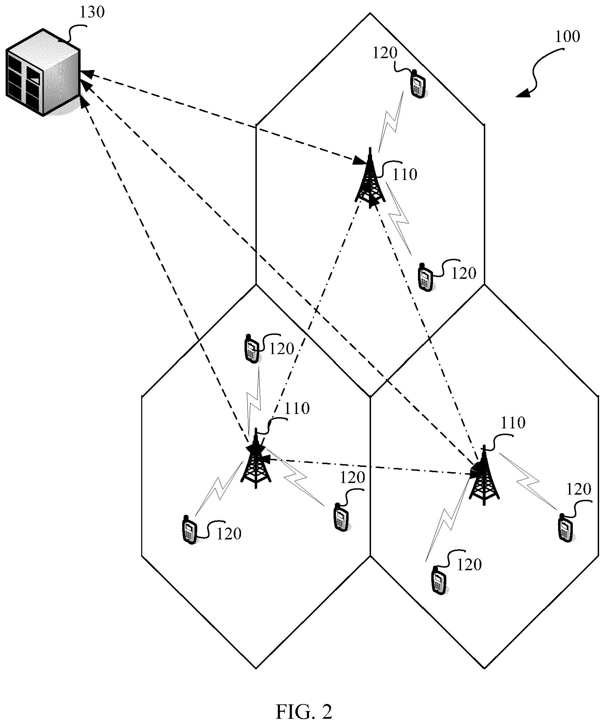

The embodiments of the present invention use an LTE communications system as an example, but are not limited thereto. As shown in FIG. 2, in a schematic architectural diagram of an LTE communications system, a wireless communications network 100 may include at least one base station 110 and a core network device 130, to support communication of a terminal 120. For example, the base station 110 may be an evolved NodeB (evolved NodeB, eNB) in LTE, and can support or manage at least one licensed cell and/or at least one LAA cell. When the terminal 120 in a dual connectivity (Dual Connectivity, DC) mode needs to communicate with the network, the terminal 120 may simultaneously receive data from at least two base stations 110. In other words, the at least two base stations 110 each provide a service for the terminal 120. The base station 110 can implement functions of a primary base station and/or a secondary base station. The core network device 130 may include a mobility management entity (Mobile Management Entity, MME).

The embodiments of the present invention are applicable to a scenario: providing a DRX timer counting scheme for carrier aggregation of an LAA cell and a licensed cell. Specifically, the embodiments of the present invention are applicable to the following carrier aggregation scenarios of the LAA cell and the licensed cell:
Scenario 1: TDD cell+LAA cell, namely, carrier aggregation of a TDD cell and an LAA cell, where the TDD cell serves as a primary cell.
Scenario 2: FDD cell+TDD cell+LAA cell, namely, carrier aggregation of a TDD cell, an FDD cell, and an LAA cell. This scenario includes two cases. In the first case, the FDD cell serves as a primary cell, and the TDD cell and the LAA cell serve as secondary cells. In the second case, the TDD cell serves as a primary cell, and the FDD cell and the LAA cell serve as secondary cells.
Scenario 3: TDD cell+TDD cell+LAA cell, namely, carrier aggregation of a TDD cell, a TDD cell, and an LAA cell. In this scenario, the TDD cells may use a same uplink-downlink configuration or different uplink-downlink configurations, one TDD cell thereof serves as a primary cell, and the other TDD cell and the LAA cell serve as secondary cells.
Scenario 4: eIMTA TDD cell+LAA cell, namely, carrier aggregation of an eIMTA TDD cell and an LAA cell, where the eIMTA TDD cell serves as a primary cell, and the LAA cell serves as a secondary cell. eIMTA TDD refers to dynamic TDD uplink-downlink configuration. For UE supporting eIMTA, an eNB informs the UE of a plurality of uplink-downlink configurations, and which configuration is to be used depends on indication of the eNB. In this way, uplink and downlink data traffic can be flexibly adapted to.
Scenario 5: LAA Cell+LAA cell (s), namely, carrier aggregation of a plurality of LAA cells, where one LAA cell serves as a primary cell, and remaining LAA cells serve as secondary cells.

For the foregoing scenarios, the embodiments of the present invention provide a counting method and an apparatus, to resolve an existing problem that in an LAA cell carrier aggregation scenario, data scheduling is affected because a terminal side and a base station side have different understandings in counting of the DRX timer. The method and the apparatus are based on a same inventive concept. Because of problem resolving principles of the method and the apparatus are similar, mutual reference may be made to implementations of the apparatus and the method. Same details are not repeatedly described.

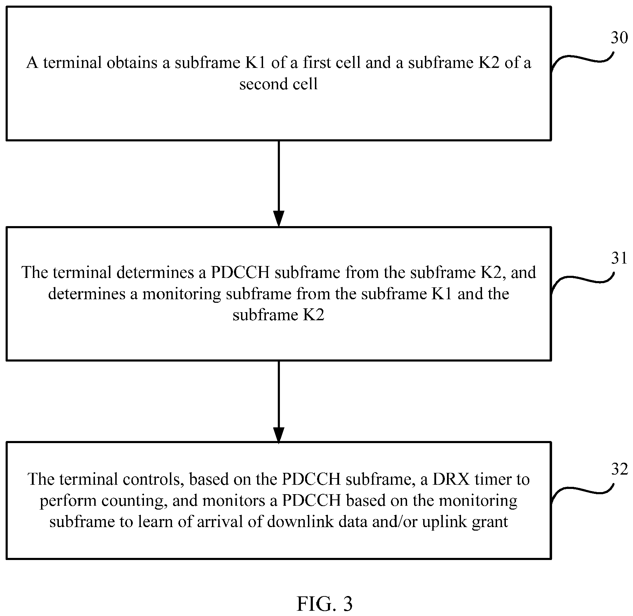

Referring to FIG. 3, FIG. 3 is a flowchart of a counting method according to an embodiment of the present invention. The method is applied to a carrier aggregation scenario of a first cell and a second cell. Optionally, the first cell is the LAA cell in the foregoing scenario, and the second cell is the licensed cell in the foregoing scenario, such as the TDD cell and/or the FDD cell. As shown in FIG. 3, the method includes the following steps.

Step 30: A terminal obtains a subframe K1 of the first cell and a subframe K2 of the second cell.

The first cell is a cell on which idle channel detection needs to be performed, and the second cell is a cell on which no idle channel detection needs to be performed.

Specifically, in the subframe K1, a base station may send a downlink transmission, or allocate an uplink transmission resource for the terminal to perform uplink transmission, or send no transmission.

It should be noted that in specific implementation, there may be one or more first cells, and similarly, there may be one or more second cells. If there are a plurality of first cells, the subframe K1 is a set of subframes of a plurality of cells. If there are a plurality of second cells, the subframe K2 is a set of subframes of a plurality of cells.

Step 31. The terminal determines a PDCCH subframe from the subframe K2, and determines a monitoring subframe from the subframe K1 and the subframe K2.

Specifically, if the terminal determines that the subframe K2 includes at least one special subframe and/or downlink subframe, it is considered that the at least one special subframe and/or downlink subframe is a PDCCH subframe.

The special subframe includes a subframe that is used to perform uplink transmission and/or downlink transmission in a time division manner. The subframe includes information about two dimensions: a time domain dimension (for example, a standard subframe duration is 1 millisecond, ms) and a frequency domain dimension (for example, a spectrum resource of specific bandwidth). The PDCCH subframe is described from the time domain dimension, and is not limited in the frequency domain dimension.

Specifically, the terminal determines, from the subframe K1 and the subframe K2, a subframe that is a non-uplink subframe as the monitoring subframe. The non-uplink subframe is a downlink subframe or a special subframe. Specifically, if all subframes of the subframe K1 are downlink subframes, or all the subframes are special subframes, or some of all the subframes are downlink subframes, or some of all the subframes are special subframes, the terminal determines all the downlink subframes or special subframes as monitoring subframes of the first cell. The monitoring subframe of the first cell is a set of subframes that include all the downlink subframes or special subframes among all the subframes of the subframe K1. Similarly, when all subframes of the subframe K2 are downlink subframes, or all the subframes are special subframes, or some of all the subframes are downlink subframes, or some of all the subframes are special subframes, the terminal determines all the downlink subframes or special subframes as monitoring subframes of the second cell. The monitoring subframe of the second cell is a set of subframes that include all the downlink subframes or special subframes among all the subframes of the subframes K2. The monitoring subframe includes the monitoring subframes of the first cell and the monitoring subframes of the second cell.

Optionally, the terminal may learn, by detecting a reference signal of the first cell and/or downlink control information, that a current subframe of the first cell is a non-uplink subframe, and learn, based on a pre-agreed subframe type rule, such as an FDD or TDD frame structure, a current subframe of the second cell is a non-uplink subframe. The downlink control information may be used to inform the terminal of a time domain location of a special subframe.

In a possible implementation, the determining, by the terminal, a PDCCH subframe from the subframe K1 and the subframe K2 may be specifically implemented in the following two implementations:
First implementation: When the terminal determines the PDCCH subframe from the subframe K1 and the subframe K2, if the subframe K1 includes an uplink transmission, or a downlink transmission, or a transmission using a different air interface technology that is not Long Term Evolution (Long Term Evolution, LTE)/Long Term Evolution-Advanced (Long Term Evolution-Advanced, LTE-A)/Long Term Evolution-Advanced Pro (Long Term Evolution-Advanced Pro, LTE-Ap), for example, a Wi-Fi transmission, and the subframe K2 includes an uplink transmission and/or a downlink transmission, the terminal may determine the PDCCH subframe.
Second implementation: When the terminal determines the PDCCH subframe from the subframe K1 and the subframe K2, if the terminal determines that the subframe K1 includes a downlink transmission, and/or the terminal determines that the subframe K2 includes a downlink transmission, the terminal may determine the PDCCH subframe. Optionally, the terminal may learn, by detecting a reference signal of the first cell and/or downlink control information, that a current subframe of the first cell includes a downlink transmission.

Step 32: The terminal controls, based on the PDCCH subframe, a DRX timer to perform counting, and monitors a PDCCH based on the monitoring subframe to learn of arrival of downlink data and/or uplink grant.

Specifically, the monitoring, by the terminal, a PDCCH in the monitoring subframe includes: monitoring, by the terminal, the PDCCH in a subframe that is a non-uplink subframe among all the subframes of the subframe K1 and subframe K2.

It should be noted that the DRX timer is an on-duration timer, a DRX inactivity timer, a DRX retransmission timer, a DRX UL retransmission timer, or a contention resolution timer.

The following details the counting method in FIG. 3 by using an implementation scenario of Scenario 1 as an example.

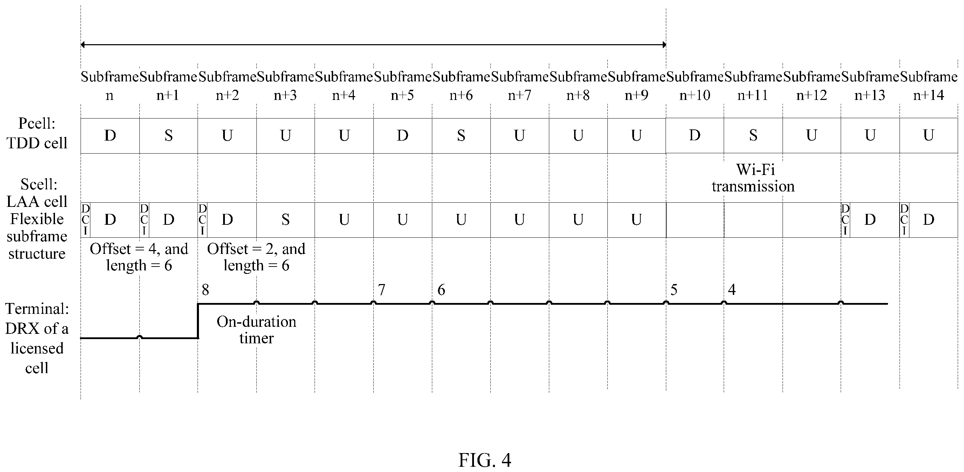

As shown in FIG. 4, in carrier aggregation of a TDD cell and an LAA cell, a PCell is the TDD cell with an uplink-downlink configuration of 2, an SCell cell is the LAA cell, and a used frame structure is a flexible frame structure. In this case, the first cell is the TDD cell, and the second cell is the LAA cell.

The terminal enters an active cycle after waking up in a subframe n+2, starts an on-duration timer, monitors a PDCCH of the LAA cell, and learns through monitoring that indication information of downlink control information is that a subframe n+4 to a subframe n+9 are uplink subframes. The terminal determines, as a PDCCH subframe, a subframe that is of a subframe of the TDD cell and that is a downlink subframe or a special subframe, that is, determine a subframe n+5, a subframe n+6, a subframe n+10, and a subframe n+11 as PDCCH subframes, and the on-duration timer counts the PDCCH subframes. The terminal determines, as a monitoring subframe, a subframe that is a non-uplink subframe and that is of a subframe of the LAA cell and the subframe of the TDD cell. The terminal receives no uplink grant indication information indicating that a subframe n+10, a subframe n+11, a subframe n+12, a subframe n+13, and a subframe n+14 of the LAA cell are uplink subframes, and therefore the terminal determines the monitoring subframe from the subframe n+2, the subframe n+3, the subframe n+5, the subframe n+6, the subframe n+10, the subframes n+11, the subframe n+12, the subframe n+13, and the subframe n+14. Specifically, the terminal detects a cell-specific reference signal of the LAA cell in the subframe n+2, the subframe n+3, the subframe n+5, the subframe n+6, the subframe n+10, the subframe n+11, the subframe n+12, the subframe n+13, and the subframe n+14, so as to learn of a monitoring subframe of the LAA cell. A monitoring subframe of the TDD cell is a downlink subframe, of the TDD cell, in the uplink-downlink configuration. The terminal monitors PDCCHs of the TDD cell and the LAA cell in the monitoring subframes to learn of arrival of downlink data and/or uplink grant.

Therefore, in the subframe n+2, the terminal controls the on-duration timer not to perform counting but needs to monitor the PDCCH of the LAA cell. Similarly, in the subframe n+3, the terminal controls the on-duration timer not to perform counting either but needs to monitor the PDCCH of the LAA cell. In the subframe n+4, the terminal neither monitors the PDCCHs of the TDD cell and the LAA cell nor controls the on-duration timers to perform counting. Similarly, in the subframe n+7 to the subframe n+9, the terminal neither monitors the PDCCHs of the TDD cell and the LAA cell nor controls the on-duration timers to perform counting. There are downlink transmissions in both the subframe n+5 and the subframe n+6 of the PCell, and therefore the terminal needs to control the on-duration timer to perform counting and monitor the PDCCH of the TDD cell. There are downlink transmissions in both the subframe n+10 and the subframe n+11 of the PCell, and therefore the terminal needs to control the on-duration timer to perform counting. If the terminal fails to detect the reference signal of the LAA cell and indication information of the downlink control information, the terminal learns that a current subframe transmission is a Wi-Fi transmission, and therefore the terminal needs to monitor only the PDCCH of the TDD cell. There is no downlink transmission in the subframe n+12 to the subframe n+14 of the PCell, and therefore the on-duration timer does not need to perform counting. In addition, the terminal cannot detect a cell-specific reference signal in the subframe n+12, and therefore the terminal needs to monitor neither the PDCCH of the LAA cell nor the PDCCH of the TDD cell. In the subframe n+13 and the subframe n+14, the terminal learns, based on a cell-specific reference signal of the LAA cell, that the current subframes are downlink subframes of the LAA cell, and therefore the terminal monitors the PDCCH of the LAA cell but does not monitor the PDCCH of the TDD cell.

Similarly, a specific counting rule and a PDCCH monitoring rule are the same for other DRX timers, such as a DRX inactivity timer, a DRX retransmission timer, a DRX UL retransmission timer, and a MAC contention resolution timer.

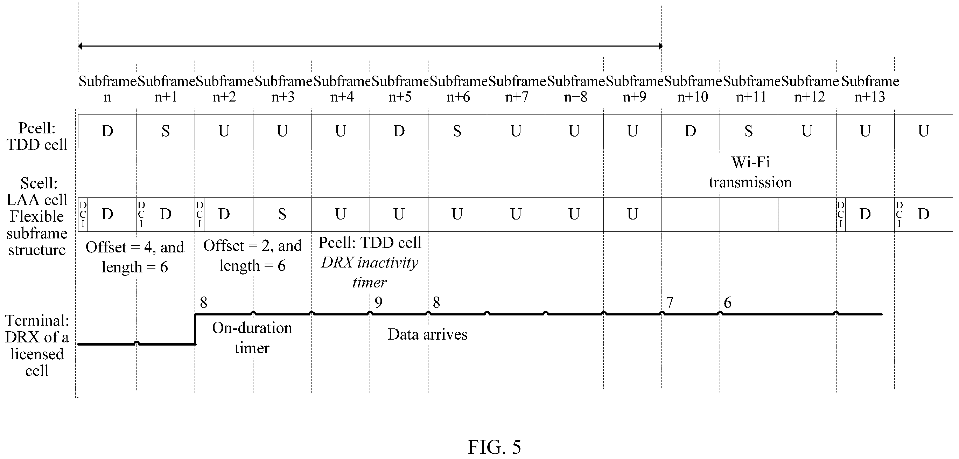

The DRX inactivity timer is used as an example. As shown in FIG. 5, the terminal also enters an active cycle after waking up in a subframe n+2, and starts an on-duration timer, and a counting rule is the same as that described above. In a subframe n+5, there is incoming downlink data, and in this case, a DRX inactivity timer is started, so that DRX active time is prolonged. A specific counting rule and a PDCCH monitoring rule are the same as those of the on-duration timer: counting the PDCCH subframe, and monitoring PDCCHs of a TDD cell and an LAA cell in a monitoring subframe to learn of arrival of downlink data and/or uplink grant.

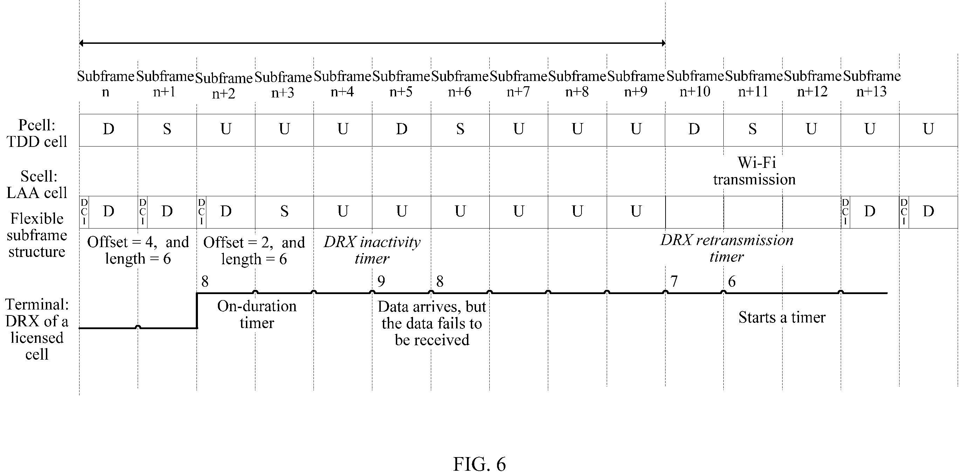

The DRX retransmission timer is used as an example. As shown in FIG. 6, the terminal also enters an active cycle after waking up in a subframe n+2, and starts an on-duration timer, and a counting rule is the same as that described above. The terminal receives downlink data in a subframe n+5, but fails to decode the data. In this case, the terminal starts a DRX retransmission timer in a subsequent subframe, to wait for to-be-retransmitted data and prolong active time. A counting rule and a PDCCH monitoring rule are the same as those of the on-duration timer: counting the PDCCH subframe, and monitoring PDCCHs of a TDD cell and an LAA cell in a monitoring subframe to learn of arrival of downlink data and/or uplink grant.

In conclusion, in the foregoing embodiment, the terminal determines the PDCCH subframe from the subframe of the cell on which no idle channel detection needs to be performed, namely, a licensed cell, controls counting of the DRX timer based on the PDCCH subframe, determines the monitoring subframe from the subframe of the cell on which idle channel detection needs to be performed and the subframe of the cell on which no idle channel detection needs to be performed, where the cell on which idle channel detection needs to be performed is an LAA cell, and the cell on which no idle channel detection needs to be performed is the licensed cell, and monitors the PDCCH in the monitoring subframe. In this way, in LAA cell carrier aggregation, a PDCCH subframe used for counting can be accurately determined on a terminal side when the DRX timer performs counting, so as to implement efficient scheduling.

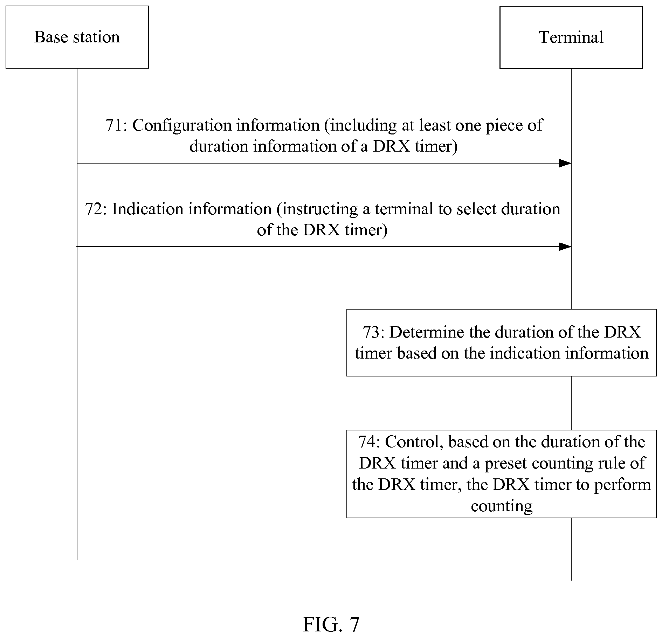

Referring to FIG. 7, FIG. 7 is a flowchart of another counting method according to an embodiment of the present invention. The method includes the following steps.

Step 71: A base station sends configuration information to a terminal, where the configuration information includes at least one piece of duration information of a DRX timer.

The DRX timer is an on-duration timer, a DRX inactivity timer, a DRX retransmission timer, a DRX UL retransmission timer, or a contention resolution timer.

Optionally, the base station sends the configuration message to the terminal by using a radio resource control message, where the configuration information includes the at least one piece of duration information of the DRX timer.

For example, the base station adds, to an RRC connection reconfiguration message, the configuration information that includes the at least one piece of duration information of the DRX timer, so as to send the configuration information to the terminal.

Step 72: The base station sends indication information to the terminal, where the indication information is used to instruct the terminal to select one of the at least one piece of duration information in the configuration information as duration of the DRX timer.

Optionally, the base station sends the indication message to the terminal by using a physical layer indication message or a Medium Access Control message.

Specifically, when sending the indication message, the base station may use direct signaling indication or indirect signaling indication.

For example, the base station configures three pieces of duration for the on-duration timer in advance: T1, T2, and T3. The base station selects the duration T2 as duration of the on-duration timer in real time based on how busy a current channel is, and informs, by using the physical layer indication message, the terminal that the duration used for the on-duration timer is T2.

For another example, the base station configures three pieces of duration for the on-duration timer in advance: T1, T2, and T3. The base station sends, to the terminal, a mapping relationship between duration of the on-duration timer and a transmission time interval (Transmission Time Interval, TTI). It is assumed that the mapping relationship between the duration of the on-duration timer and the TTI is: A sub frame number that has a remainder of 1 when divided by 3 is corresponding to T1, a subframe number that has a remainder of 2 when divided by 3 is corresponding to T2, and a subframe number that can be exactly divided by 3 is corresponding to T3. The terminal may determine, based on a current frame number and/or subframe number, which on-duration timer duration is to use. For example, a subframe 1 is corresponding to T1, a subframe 2 is corresponding to T2, and a subframe 3 is corresponding to T3. Therefore, the terminal determines the duration of the current DRX timer based on a PDCCH indication downlink transmission received in a subframe. The base station determines, based on downlink transmission feedback of the terminal, to-be-used duration for the terminal.

Step 73: The terminal determines the duration of the DRX timer based on the indication information.

Step 74: The terminal controls, based on the duration of the DRX timer and a preset counting rule of the DRX timer, the DRX timer to perform counting.

Specifically, the counting rule of the DRX timer is negotiated and determined by the base station and the terminal in advance. The same counting rule is followed to avoid that data scheduling is affected because a terminal side and a base station side have different understandings in counting of the DRX timer.

The DRX timer is an on-duration timer, a DRX inactivity timer, a DRX retransmission timer, a DRX UL retransmission timer, or a contention resolution timer.

In conclusion, in the foregoing embodiment, the base station sends the configuration information to the terminal, pre-configures at least one piece of alternative duration information for the DRX timer, and sends the indication information to the terminal, so as to instruct the terminal to select one of the at least one piece of duration information in the configuration information as the duration of the DRX timer, and the terminal controls, based on the duration of the DRX timer and the preset counting rule of the DRX timer, the DRX timer to perform counting. In this way, the terminal uses DRX timer duration pre-configured by the base station for the terminal and a same DRX timer counting rule, and therefore it is avoided that data scheduling is affected because the terminal and the base station have different understandings in counting of the DRX timer.

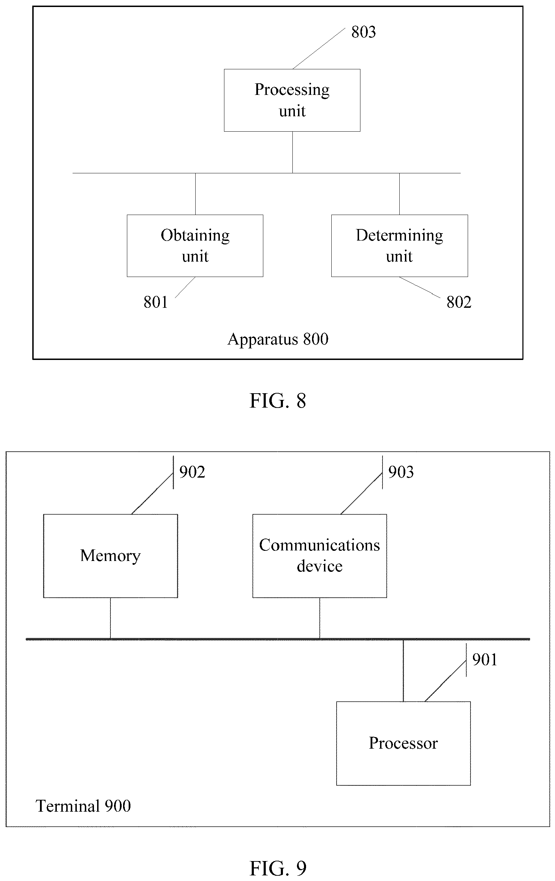

Based on the counting methods provided in the foregoing embodiments, referring to FIG. 8, an embodiment of the present invention provides an apparatus 800. The apparatus 800 is applied to a terminal, and the terminal is applied to a carrier aggregation scenario of a first cell and a second cell. FIG. 8 is a schematic structural diagram of the apparatus 800 according to an embodiment of the present invention. As shown in FIG. 8, the apparatus 800 includes an obtaining unit 801, a determining unit 802, and a processing unit 803.

The obtaining unit 801 is configured to obtain a subframe K1 of the first cell and a subframe K2 of the second cell.

The determining unit 802 is configured to determine a PDCCH subframe from the subframe K2, and determine a monitoring subframe from the subframe K1 and the subframe K2.

The processing unit 803 is configured to control, based on the PDCCH subframe, a DRX timer to perform counting, and monitor a PDCCH based on the monitoring subframe to learn of arrival of downlink data and/or uplink grant.

The first cell is a cell on which idle channel detection needs to be performed, and the second cell is a cell on which no idle channel detection needs to be performed.

Optionally, when determining the PDCCH subframe from the subframe K2, the determining unit 802 is specifically configured to determine that the subframe K2 includes at least one special subframe and/or downlink subframe.

The special subframe includes a subframe used to perform uplink transmission and/or downlink transmission in a time division manner.

Optionally, when determining the monitoring subframe from the subframe K1 and the subframe K2, the determining unit 802 is specifically configured to:
determine, from the subframe K1 and the subframe K2, a subframe that is a non-uplink subframe as the monitoring subframe.

Optionally, the DRX timer is an on-duration timer, a DRX inactivity timer, a DRX retransmission timer, or a contention resolution timer.

The apparatus 800 in this embodiment of the present invention may be a separate part, or may be integrated into another part. For example, the apparatus 800 provided in this embodiment of the present invention may be a terminal in an existing communications network, or may be a part integrated into a terminal.

It should be noted that for function implementation and interaction manners of the units of the apparatus 800 in this embodiment of the present invention, reference may be made to the description of the related method embodiment. Details are not described herein again.

In addition, the "units" may be implemented as an application-specific integrated circuit (application-specific integrated circuit, ASIC), a processor that executes one or more software or firmware programs and a memory, an integrated logic circuit, and/or another device that can provide the foregoing functions.

Based on the same inventive concept, referring to FIG. 9, an embodiment of the present invention provides a terminal 900. FIG. 9 is a schematic structural diagram of the terminal 900 according to an embodiment of the present invention. The terminal 900 is applied to a carrier aggregation scenario of a first cell and a second cell. As shown in FIG. 9, the terminal 900 includes a processor 901, a memory 902, and a communications device 903. Program code for executing the solutions in the present invention is stored in the memory 902, and is controlled by the processor 901 for execution.

A program stored in the memory 902 is used to instruct the processor 901 to perform a counting method, including: obtaining, by the communications device 903, a subframe K1 of the first cell and a subframe K2 of the second cell; determining a PDCCH subframe from the frame K2, and determining a monitoring subframe from the subframe K1 and the subframe K2; and controlling, based on the PDCCH subframe, a DRX timer to perform counting, and monitoring a PDCCH based on the monitoring subframe to learn of arrival of downlink data and/or uplink grant.

The first cell is a cell on which idle channel detection needs to be performed, and the second cell is a cell on which no idle channel detection needs to be performed.

Optionally, when determining the PDCCH subframe from the subframe K2, the processor 901 is specifically configured to determine that the subframe K2 includes at least one special subframe and/or downlink subframe, where the special subframe includes a subframe used to perform uplink transmission and/or downlink transmission in a time division manner.

Optionally, when determining the monitoring subframe from the subframe K1 and the subframe K2, the processor 901 is specifically configured to:
determine, from the subframe K1 and the subframe K2, a subframe that is a non-uplink subframe as the monitoring subframe.

Optionally, the DRX timer is an on-duration timer, a DRX inactivity timer, a DRX retransmission timer, or a contention resolution timer.

It can be understood that the terminal 900 in this embodiment may be configured to implement all the described functions of the terminal in FIG. 3 in the foregoing method embodiment. For a specific implementation process thereof, refer to the related description of the method performed by the terminal in the foregoing method embodiment. Details are not described herein again.

It can be understood that the described processor 901 of the terminal 900 in this embodiment of the present invention may be a general-purpose central processing unit (CPU), a microprocessor, an application-specific integrated circuit, or one or more integrated circuits configured to control execution of the solutions and procedures of the present invention. One or more memories included in a computer system may be a read-only memory (read-only memory, ROM) or another type of static storage device that can store static information and an instruction, a random access memory (random access memory, RAM) or another type of dynamic storage device that can store information and an instruction, or a magnetic disk storage. The memories are connected to the processor by using a bus.

The communications device 903 may be an entity module that can implement a transmission and reception function, to communicate with another device or a communications network.

The memory 902, for example, a RAM, stores an operating system and a program that executes the solutions in the present invention. The operating system is a program used to control running of another program and manage system resources.

The memory 902 and the communications device 903 may be connected to the processor 901 by using a bus, or may be separately connected to the processor 901 by using a dedicated connection line.

Code corresponding to the method in FIG. 3 in the embodiments of the present invention is incorporated into a chip by designing and programming the processor 901, so that when the chip runs, the method in FIG. 3 can be performed. How to design and program the processor 901 is a technology well known by a person skilled in the art. Details are not described herein.

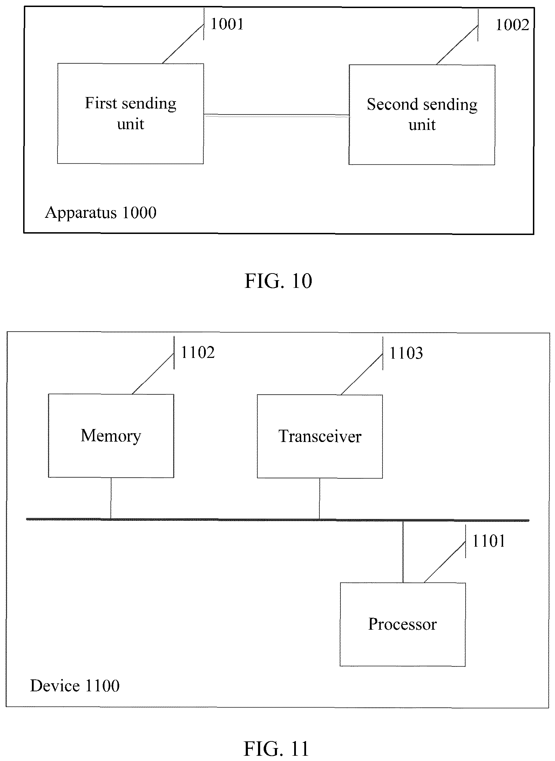

Based on the counting methods provided in the foregoing embodiments, referring to FIG. 10, an embodiment of the present invention provides a counting apparatus 1000, and the apparatus 1000 is applied to a base station. FIG. 10 is a schematic structural diagram of the apparatus 1000 according to an embodiment of the present invention. As shown in FIG. 10, the apparatus 1000 includes a first sending unit 1001 and a second sending unit 1002.

The first sending unit 1001 is configured to send configuration information to a terminal, where the configuration information includes at least one piece of duration information of a DRX timer.

The second sending unit 1002 is configured to send indication information to the terminal, where the indication information is used to instruct the terminal to select one of the at least one piece of duration information in the configuration information as duration of the DRX timer.

Optionally, the first sending unit 1001 is configured to:
send the configuration message to the terminal by using a radio resource control message, where the configuration information includes the at least one piece of duration information of the DRX timer.

Optionally, the second sending unit 1002 is configured to:
send the indication message to the terminal by using a physical layer indication message or a Medium Access Control message.

Optionally, the DRX timer is an on-duration timer, a DRX inactivity timer, a DRX retransmission timer, or a contention resolution timer.

The apparatus 1000 in this embodiment of the present invention may be a separate part, or may be integrated into another part. For example, the apparatus 1000 provided in this embodiment of the present invention may be a base station in an existing communications network, or may be a part integrated into a base station.

It should be noted that for function implementation and interaction manners of the units of the apparatus 1000 in this embodiment of the present invention, reference may be made to the description of the related method embodiment. Details are not described herein again.

In addition, the "units" may be implemented as an ASIC, a processor that executes one or more software or firmware programs and a memory, an integrated logic circuit, and/or another device that can provide the foregoing functions.

Based on a same inventive concept, referring to FIG. 11, an embodiment of the present invention provides a network device 1100. FIG. 11 is a schematic structural diagram of the device 1100 according to an embodiment of the present invention. The device 1100 may be a base station or another device of the base station. As shown in FIG. 11, the device 1100 includes a processor 1101, a memory 1102, a transceiver 1103. Program code for executing the solutions in the present invention is stored in the memory 1102, and is controlled by the processor 1101 for execution.

A program stored in the memory 1102 is used to instruct the processor 1101 to perform a counting method, including: sending, by the transceiver 1103, configuration information to a terminal, where the configuration information includes at least one piece of duration information of a DRX timer; and sending, by the transceiver 1103, indication information to the terminal, where the indication information is used to instruct the terminal to select one of the at least one piece of duration information in the configuration information as duration of the DRX timer.

Optionally, the transceiver 1103 is configured to:
send the configuration message to the terminal by using a radio resource control message, where the configuration information includes the at least one piece of duration information of the DRX timer.

Optionally, the transceiver 1103 is configured to:
send the indication message to the terminal by using a physical layer indication message or a Medium Access Control message.

Optionally, the DRX timer is an on-duration timer, a DRX inactivity timer, a DRX retransmission timer, or a contention resolution timer.

It can be understood that the device 1100 in this embodiment may be configured to implement all the described functions of the base station in FIG. 7 in the foregoing method embodiment. For a specific implementation process thereof, refer to the related description of the method performed by the base station in the foregoing method embodiment. Details are not described herein again.

It can be understood that the described processor 1101 of the device 1100 in this embodiment of the present invention may be a general-purpose central processing unit, a microprocessor, an ASIC, or one or more integrated circuits configured to control execution of the solutions and procedures of the present invention. One or more memories included in a computer system may be a ROM or another type of static storage device that can store static information and an instruction, a RAM or another type of dynamic storage device that can store information and an instruction, or a magnetic disk storage. The memories are connected to the processor by using a bus.

The transceiver 1103 may be an entity module that can implement a transmission and reception function, to communicate with another device or a communications network.

The memory 1102, for example, a RAM, stores an operating system and a program that executes the solutions in the present invention. The operating system is a program used to control running of another program and manage system resources.

The memory 1102 and the transceiver 1103 may be connected to the processor 1101 by using a bus, or may be separately connected to the processor 1101 by using a dedicated connection line.

Code corresponding to a process executed by the base station in the method in FIG. 7 in the embodiments of the present invention is incorporated into a chip by designing and programming the processor 1101, so that when the chip runs, the process executed by the base station in FIG. 7 can be executed. How to design and program the processor 1101 is a technology well known by a person skilled in the art. Details are not described herein.

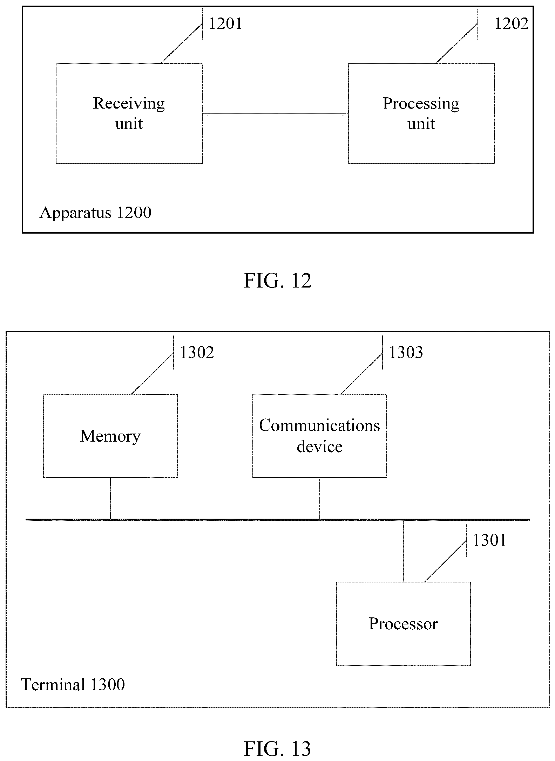

Based on the counting methods provided in the foregoing embodiments, referring to FIG. 12, an embodiment of the present invention provides a counting apparatus 1200, and the apparatus 1200 is applied to a terminal. FIG. 12 is a schematic structural diagram of the apparatus 1200 according to an embodiment of the present invention. As shown in FIG. 12, the apparatus 1200 includes a receiving unit 1201 and a processing unit 1202.

The receiving unit 1201 is configured to receive configuration information that is sent by a base station and that includes at least one piece of duration information of a DRX timer.

The receiving unit 1201 is further configured to receive indication information sent by the base station, where the indication information is used to instruct to select one of the at least one piece of duration information in the configuration information as duration of the DRX timer.

The processing unit 1202 is configured to determine the duration of the DRX timer based on the indication information.

The processing unit 1202 is further configured to control, based on the duration of the DRX timer and a preset counting rule of the DRX timer, the DRX timer to perform counting.

The apparatus 1200 in this embodiment of the present invention may be a separate part, or may be integrated into another part. For example, the apparatus 1200 provided in this embodiment of the present invention may be a terminal in an existing communications network, or may be a part integrated into a terminal.

It should be noted that for function implementation and interaction manners of the units of the apparatus 1200 in this embodiment of the present invention, reference may be made to the description of the related method embodiment. Details are not described herein again.

In addition, the "units" may be implemented as an application-specific integrated circuit, a processor that executes one or more software or firmware programs and a memory, an integrated logic circuit, and/or another device that can provide the foregoing functions.

Based on a same inventive concept, referring to FIG. 13, an embodiment of the present invention provides a terminal 1300. FIG. 13 is a schematic structural diagram of the terminal 1300 according to an embodiment of the present invention. As shown in FIG. 13, the terminal 1300 includes a processor 1301, a memory 1302, a communications device 1303. Program code for executing the solutions in the present invention is stored in the memory 1302, and is controlled by the processor 1301 for execution.

A program stored in the memory 1302 is used to instruct the processor 1301 to perform a counting method, including: receiving, by the communications device 1303, configuration information that is sent by a base station and that includes at least one piece of duration information of a DRX timer; receiving, by the communications device 1303, indication information sent by the base station, where the indication information is used to instruct to select one of the at least one piece of duration information in the configuration information as duration of the DRX timer; determining the duration of the DRX timer based on the indication information; and controlling, based on the duration of the DRX timer and a preset counting rule of the DRX timer, the DRX timer to perform counting.

It can be understood that the terminal 1300 in this embodiment may be configured to implement all the described functions of the terminal in FIG. 7 in the foregoing method embodiment. For a specific implementation process thereof, refer to the related description of the method performed by the terminal in the foregoing method embodiment. Details are not described herein again.

It can be understood that the described processor 1301 of the terminal 1300 in this embodiment of the present invention may be a general-purpose central processing unit, a microprocessor, an application-specific integrated circuit, or one or more integrated circuits configured to control execution of the solutions and procedures of the present invention. One or more memories included in a computer system may be a ROM or another type of static storage device that can store static information and an instruction, a RAM or another type of dynamic storage device that can store information and an instruction, or a magnetic disk storage. The memories are connected to the processor by using a bus.

The communications device 1303 may be an entity module that can implement a transmission and reception function, to communicate with another device or a communications network.

The memory 1302, for example, a RAM, stores an operating system and a program that executes the solutions in the present invention. The operating system is a program used to control running of another program and manage system resources.

The memory 1302 and the communications device 1303 may be connected to the processor 1301 by using a bus, or may be separately connected to the processor 1301 by using a dedicated connection line.

Code corresponding to the method performed by the terminal in FIG. 7 in the embodiments of the present invention is incorporated into a chip by designing and programming the processor 1301, so that when the chip runs, the process executed by the terminal in the method in FIG. 7 can be executed. How to design and program the processor 1301 is a technology well known by a person skilled in the art. Details are not described herein.

A person of ordinary skill in the art may understand that all or some of the steps in each of the foregoing method of the embodiments may be implemented by a program instructing a processor. The foregoing program may be stored in a computer readable storage medium. The storage medium may be a non-transitory (English: non-transitory) medium, such as a random access memory, read-only memory, a flash memory, a hard disk, a solid state drive, a magnetic tape (English: magnetic tape), a floppy disk (English: floppy disk), an optical disc (English: optical disc), or any combination thereof.

The present invention is described with reference to the flowcharts and block diagrams of the methods and devices in the embodiments of the present invention. It should be understood that computer program instructions may be used to implement each process and each block in the flowcharts and the block diagrams and a combination of a process and a block in the flowcharts and the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts or in one or more blocks in the block diagrams.

The foregoing descriptions are merely example implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A counting method, wherein the method is applied to a carrier aggregation scenario of a first cell and a second cell, and comprises:
obtaining, by a terminal, a subframe K1 of the first cell and a subframe K2 of the second cell;
determining, by the terminal, a physical downlink control channel PDCCH subframe from the subframe K2, and determining a monitoring subframe from the subframe K1 and the subframe K2; and
controlling, by the terminal based on the PDCCH subframe, a discontinuous reception DRX timer to perform counting, and monitoring a PDCCH based on the monitoring subframe to learn of arrival of downlink data and/or uplink grant, wherein
the first cell is a cell on which idle channel detection needs to be performed, and the second cell is a cell on which no idle channel detection needs to be performed.

2. The method according to claim 1, wherein the determining, by the terminal, a PDCCH subframe from the subframe K2 comprises:
determining, by the terminal, that the subframe K2 comprises at least one special subframe and/or downlink subframe, wherein
the special subframe comprises a subframe used to perform uplink transmission and/or downlink transmission in a time division manner.

3. The method according to claim 1, wherein the determining, by the terminal, a monitoring subframe from the subframe K1 and the subframe K2 comprises:
determining, by the terminal from the subframe K1 and the subframe K2, a subframe that is a non-uplink subframe as the monitoring subframe.

4. The method according to claim 1, wherein the DRX timer is an on-duration timer, a DRX inactivity timer, a DRX retransmission timer, or a contention resolution timer.

5. A counting method, comprising:
sending, by a base station, configuration information to a terminal, wherein the configuration information comprises at least one piece of duration information of a discontinuous reception DRX timer; and
sending, by the base station, indication information to the terminal, wherein the indication information is used to instruct the terminal to select one of the at least one piece of duration information in the configuration information as duration of the DRX timer.

6. The method according to claim 5, wherein the sending, by a base station, configuration information to a terminal comprises:
sending, by the base station, the configuration message to the terminal by using a radio resource control message, wherein the configuration information comprises the at least one piece of duration information of the DRX timer.

7. The method according to claim 5, wherein the sending, by the base station, indication information to the terminal comprises:
sending, by the base station, the indication message to the terminal by using a physical layer indication message or a Medium Access Control message.

8. The method according to claim 5, wherein the DRX timer is an on-duration timer, a DRX inactivity timer, a DRX retransmission timer, or a contention resolution timer.

9. A counting method, comprising:
receiving, by a terminal, configuration information that is sent by a base station and that comprises at least one piece of duration information of a discontinuous reception DRX timer;
receiving, by the terminal, indication information sent by the base station, wherein the indication information is used to instruct the terminal to select one of the at least one piece of duration information in the configuration information as duration of the DRX timer;
determining, by the terminal, the duration of the DRX timer based on the indication information; and
controlling, by the terminal based on the duration of the DRX timer and a preset counting rule of the DRX timer, the DRX timer to perform counting.

10. A terminal, wherein the terminal is applied to a carrier aggregation scenario of a first cell and a second cell, and comprises:
a communications device, configured to transmit/ receive a radio signal;
a processor, configured to obtain a subframe K1 of the first cell and a subframe K2 of the second cell by using the communications device; determine a physical downlink control channel PDCCH subframe from the subframe K2, and determine a monitoring subframe from the subframe K1 and the subframe K2; and control, based on the PDCCH subframe, a discontinuous reception DRX timer to perform counting, and monitor a PDCCH based on the monitoring subframe to learn of arrival of downlink data and/or uplink grant, wherein
the first cell is a cell on which idle channel detection needs to be performed, and the second cell is a cell on which no idle channel detection needs to be performed.

11. The terminal according to claim 10, wherein when determining the PDCCH subframe from the subframe K2, the processor is specifically configured to:
determine that the subframe K2 comprises at least one special subframe and/or downlink subframe, wherein
the special subframe comprises a subframe used to perform uplink transmission and/or downlink transmission in a time division manner.

12. The terminal according to claim 10, wherein when determining the monitoring subframe from the subframe K1 and the subframe K2, the processor is specifically configured to:
determine, from the subframe K1 and the subframe K2, a subframe that is a non-uplink subframe as the monitoring subframe.

13. The terminal according to claim 10, wherein the DRX timer is an on-duration timer, a DRX inactivity timer, a DRX retransmission timer, or a contention resolution timer.

14. A network device, comprising:
a processor, configured to generate configuration information; and
a transceiver, configured to send the configuration information to a terminal, wherein the configuration information comprises at least one piece of duration information of a discontinuous reception DRX timer, wherein
the transceiver is further configured to send indication information to the terminal, wherein the indication information is used to instruct the terminal to select one of the at least one piece of duration information in the configuration information as duration of the DRX timer.

15. The network device according to claim 14, wherein the transceiver is configured to:
send the configuration message to the terminal by using a radio resource control message, wherein the configuration information comprises the at least one piece of duration information of the DRX timer.

16. The network device according to claim 14, wherein the transceiver is configured to:
send the indication message to the terminal by using a physical layer indication message or a Medium Access Control message.

17. The network device according to claim 14, wherein the DRX timer is an on-duration timer, a DRX inactivity timer, a DRX retransmission timer, or a contention resolution timer.

18. A terminal, comprising:
a communications device, configured to receive configuration information that is sent by a base station and that comprises at least one piece of duration information of a discontinuous reception DRX timer, wherein
the communications device is further configured to receive indication information sent by the base station, wherein the indication information is used to instruct the terminal to select one of the at least one piece of duration information in the configuration information as duration of the DRX timer; and
a processor, configured to determine the duration of the DRX timer based on the indication information, wherein
the processor is further configured to control, based on the duration of the DRX timer and a preset counting rule of the DRX timer, the DRX timer to perform counting.
